# EUROPEAN PATENT APPLICATION

(11) **EP 4 654 119 A1**
(43) Date of publication of application: **26.11.2025**
(21) Application number: 23917759.5
(22) Date of filing: 25.12.2023
(51) Int. Cl.: G06Q 50/26

(54) **INFORMATION PROCESSING METHOD, INFORMATION PROCESSING SYSTEM, AND PROGRAM**

(30) Priority: 19.01.2023 US 202363439953 P
(71) Applicant: Panasonic Intellectual Property Management Co., Ltd., Kadoma-shi, Osaka 571-0057 (JP)
(72) Inventor: NISHIDA, Naohisa, Kadoma-shi, Osaka 571-0057 (JP); YAMAMOTO, Kakuya, Kadoma-shi, Osaka 571-0057 (JP); TAKAHASHI, Yasushi, Kadoma-shi, Osaka 571-0057 (JP); NAKASAKA, Ayaka, Kadoma-shi, Osaka 571-0057 (JP)
(74) Representative: Appelt, Christian W.
(86) International application number: PCT/JP2023/046336
(87) International publication number: WO 2024/154549

(57) **Abstract**

An information processing method includes: storing, into a distributed ledger, transaction data indicating first value information that indicates a first value and to which attribute information of the first value is linked (Step S1); reading the first value information indicated in the transaction data stored in the distributed ledger, and performing a calculation process of calculating second value information indicating a second value, by performing, for the first value information that has been read, an operation in which the attribute information linked to the first value information is factored (Step S2); and outputting the second value information calculated in the calculation process.

## Description

### [Technical Field]

The present invention relates to information processing methods, information processing systems, and programs.

### [Background Art]

Techniques to properly store information without using a device such as a specific server include distributed ledger technology. One example of the information to be stored in a distributed ledger is information regarding the generation of green electricity.

A conventionally known device controls, evaluates, and certifies the demand and supply of green electricity (refer to Patent Literature (PTL) 1).

### [Citation List]

### [Patent Literature]

[PTL 1]
Japanese Unexamined Patent Application Publication No. 2011-164700

### [Summary of Invention]

### [Technical Problem]

When information is stored in a distributed ledger, the power consumption required for maintaining or updating the distributed ledger may increase. For example, when information (also referred to as value information) indicating the value of the generation of green electricity (also referred to as an environmental value) is stored in the distributed ledger, the power consumption required for maintaining or updating the distributed ledger may increase.

Thus, the present invention provides an information processing method, etc., for reducing the power consumption required for a distributed ledger to store value information.

### [Solution to Problem]

An information processing method according to one aspect of the present invention is an information processing method that is performed by an information processing system and includes: storing, into a distributed ledger, transaction data indicating first value information that indicates a first value and to which attribute information of the first value is linked; reading the first value information indicated in the transaction data stored in the distributed ledger; performing a calculation process of calculating second value information indicating a second value, by performing, for the first value information that has been read, an operation in which the attribute information linked to the first value information is factored; and outputting the second value information calculated in the calculation process.

Note that these general and specific aspects may be implemented using a system, a device, an integrated circuit, a computer program, or a computer-readable recording medium such as compact disc read-only memory (CD-ROM), or any combination of systems, devices, integrated circuits, computer programs, or recording media.

### [Advantageous Effects of Invention]

The present invention can contribute to a reduction in power consumption required for a distributed ledger to store value information.

### [Brief Description of Drawings]

[FIG. 1]

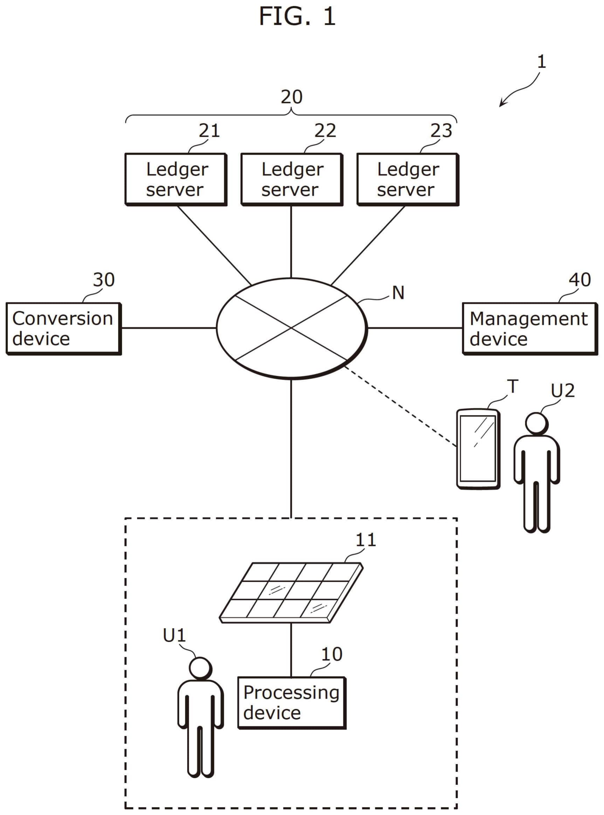

   FIG. 1 is a schematic diagram illustrating the overall configuration of an information processing system according to an embodiment.
[FIG. 2]

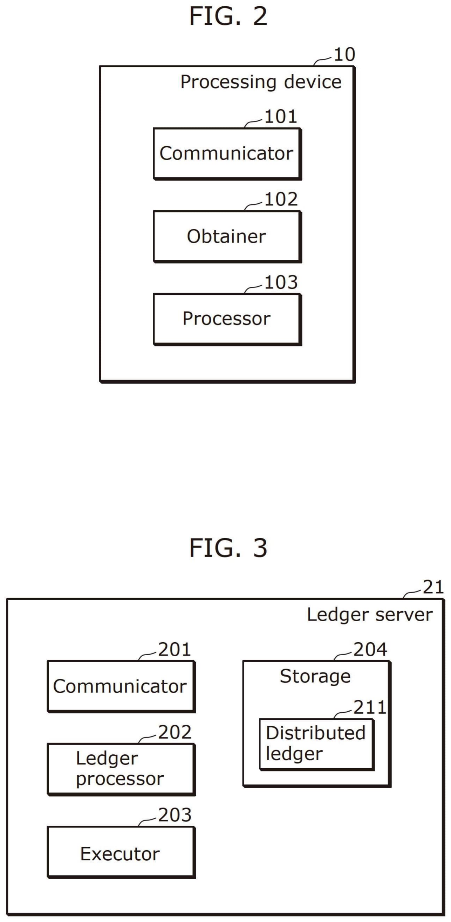

   FIG. 2 is a block diagram illustrating the functional configuration of a processing device according to an embodiment.
[FIG. 3]
   FIG. 3 is a block diagram illustrating the functional configuration of a ledger server according to an embodiment.
[FIG. 4]

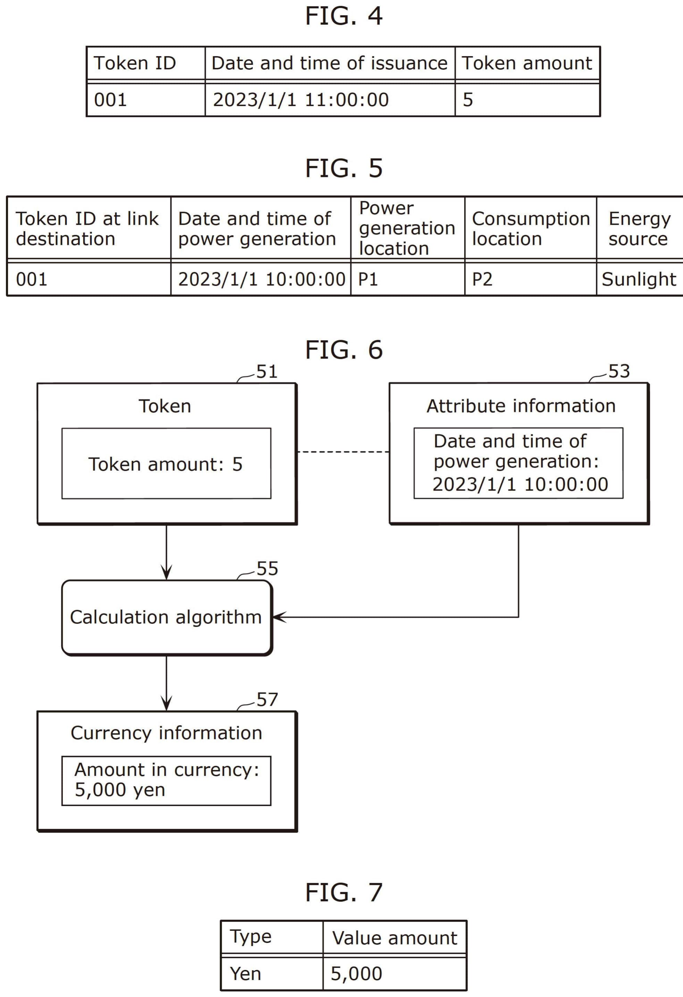

   FIG. 4 is an explanatory diagram illustrating an example of a token according to an embodiment.
[FIG. 5]
   FIG. 5 is an explanatory diagram illustrating an example of attribute information according to an embodiment.
[FIG. 6]
   FIG. 6 is an explanatory diagram illustrating a calculation process according to an embodiment.
[FIG. 7]
   FIG. 7 is an explanatory diagram illustrating an example of currency information according to an embodiment.
[FIG. 8]

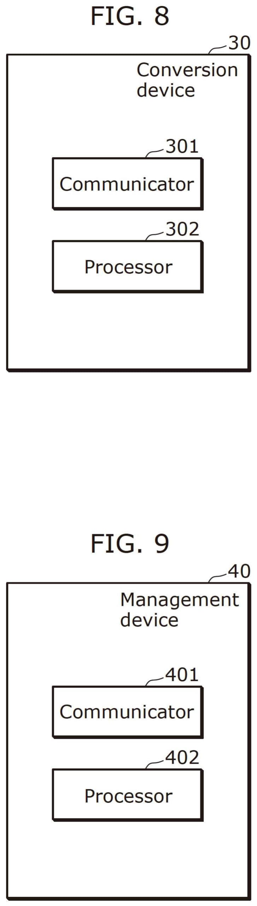

   FIG. 8 is a block diagram illustrating the functional configuration of a conversion device according to an embodiment.
[FIG. 9]
   FIG. 9 is a block diagram illustrating the functional configuration of a management device according to an embodiment.
[FIG. 10]

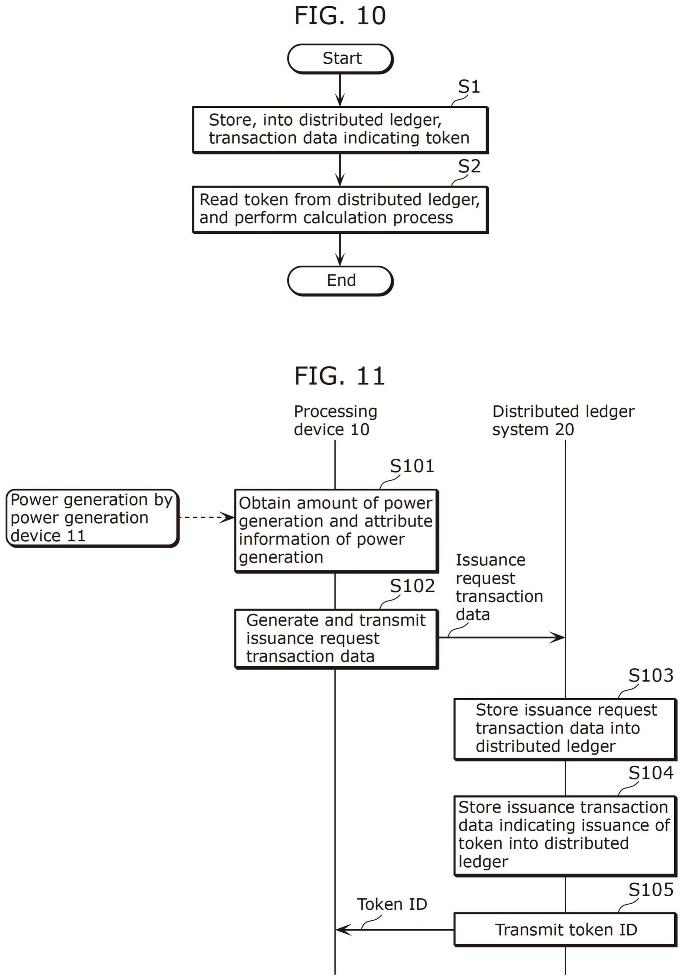

   FIG. 10 is a flowchart illustrating an example of processing performed by an information processing system according to an embodiment.
[FIG. 11]
   FIG. 11 is a sequence chart illustrating the first example of processing performed by an information processing system according to an embodiment.
[FIG. 12]

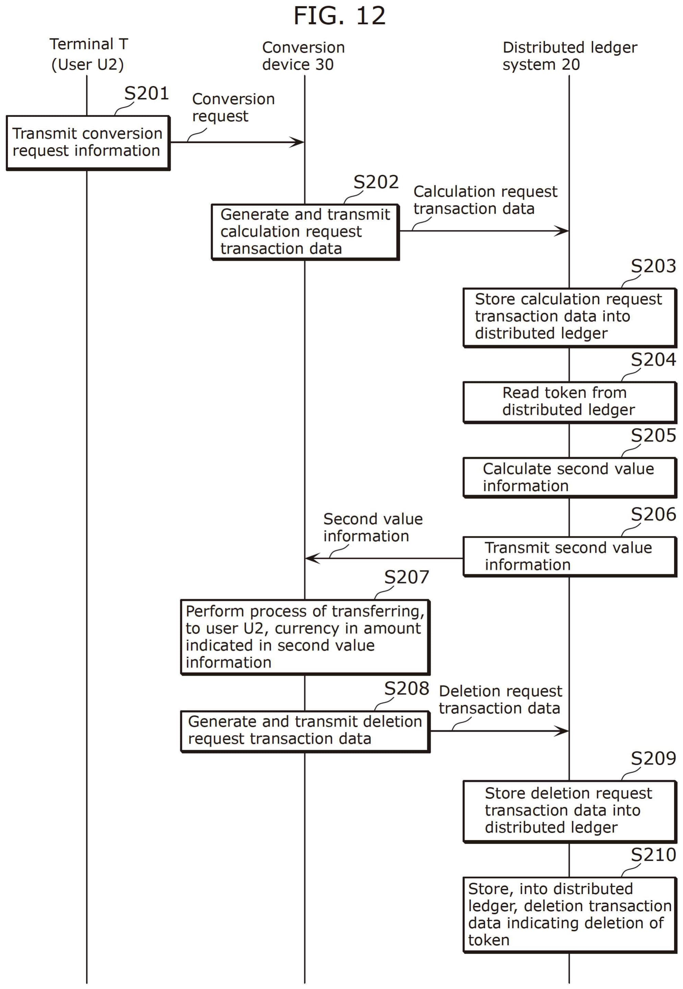

   FIG. 12 is a sequence chart illustrating the second example of processing performed by an information processing system according to an embodiment.
[FIG. 13]

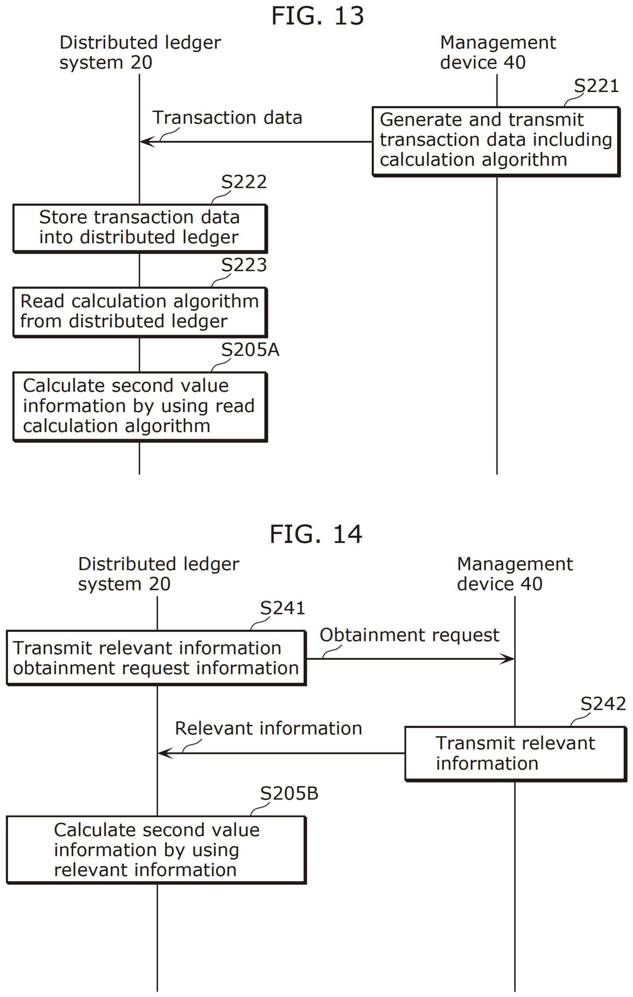

   FIG. 13 is a sequence chart illustrating an example of processing performed by an information processing system according to Variation 1 of an embodiment.
[FIG. 14]
   FIG. 14 is a sequence chart illustrating an example of processing performed by an information processing system according to Variation 2 of an embodiment.
[FIG. 15]

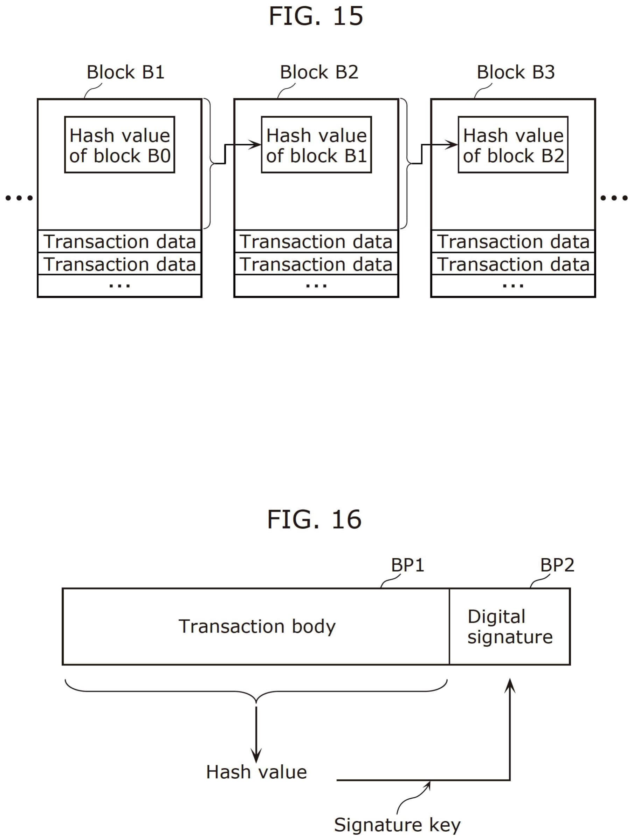

   FIG. 15 is an explanatory diagram illustrating the data structure of a blockchain which is one example of a distributed ledger.
[FIG. 16]
   FIG. 16 is an explanatory diagram illustrating the data structure of transaction data.
[FIG. 17]

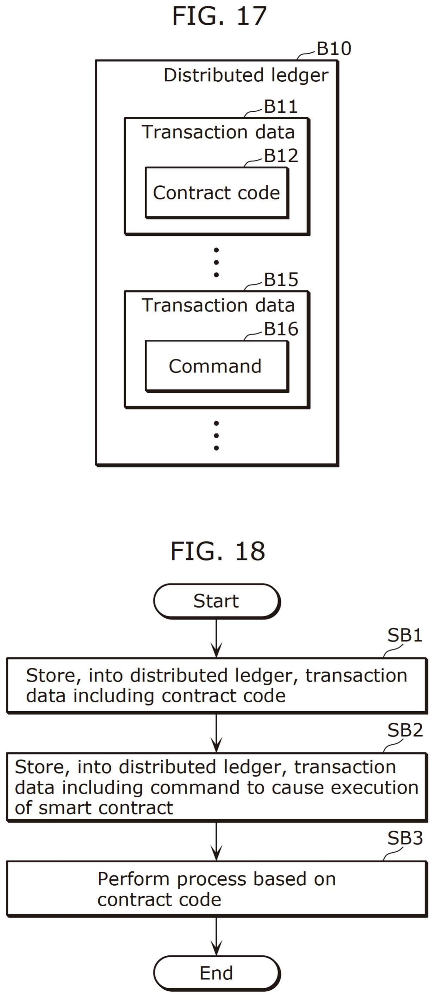

   FIG. 17 is an explanatory diagram illustrating transaction data related to execution of a smart contract.
[FIG. 18]
   FIG. 18 is an explanatory diagram illustrating processing related to execution of a smart contract.

### [Description of Embodiments]

### (Underlying Knowledge Forming Basis of the Present Invention)

The inventors have found the following problems regarding the technique related to green electricity disclosed in the "Background Art" section.

Green electricity is electric power generated from natural energy such as sunlight, wind energy, and biomass (biological resources). It is considered that power generation from natural energy does not involve generation of carbon dioxide during power generation. Natural energy is also called renewable energy as the resource is renewable. The electric power generated from renewable energy is considered as energy that imposes lower environmental burdens.

Conventionally, public agencies, business enterprises, or the like manage evaluation and certification of green electricity obtained by power generation from renewable energy. Schemes and systems related to evaluation and certification of green electricity include J-credits, green electricity certificates, non-fossil certificates, and the like.

When value information indicating the environmental value of the generation of green electricity is stored in a distributed ledger, it is possible to properly store the value information while substantially preventing tampering with the value information, without using a device such as a server that consolidates information (what is called a centralized server).

On the other hand, the magnitude of the environmental value of power generation from renewable energy changes due to various factors after said power generation (in other words, generation of said environmental value), and may possibly become zero. For example, there are cases where the magnitude of the environmental value is managed as something that tends to decrease with an increase in the amount of time elapsed between the point in time of said power generation and the current point in time. For example, there are cases where the environmental value managed under the J-credit scheme is designed to be valid only until the end of the year in which said electric power is generated. In other words, there are cases where the magnitude of said environmental value is managed as being zero (that is, no environmental value) after the end of the year in which said electric power is generated.

When information is stored in a distributed ledger, a plurality of servers that hold the distributed ledger (also referred to as ledger servers) need to each include a storage device having storage capacity sufficient to store said information. Furthermore, the plurality of ledger servers need to perform relatively complex calculation processes and communication to store new information into the distributed ledger, and the calculation processes and the communication require a relatively large amount of electric power.

When the magnitude of an environmental value becomes extremely small (in other words, becomes close to zero) or becomes zero after generation of said environmental value, the power consumption required for a ledger server to issue value information indicating said environmental value and store the value information may be evaluated as having been wasteful. Furthermore, in this case, the storage capacity of the ledger server required to store the value information may be evaluated as having been wasteful.

Note that the problems regarding the storing of the value information into the distributed ledger also apply to the storing of value information indicating another value different from the environmental value into the distributed ledger.

Thus, the present invention provides an information processing method, etc., for reducing the power consumption required for a distributed ledger to store value information.

Hereinafter, an invention obtained from the disclosure of the present specification will be described as an example, and advantageous effects, etc., obtained from the invention will be explained.
(1) An information processing method that is performed by an information processing system includes: storing, into a distributed ledger, transaction data indicating first value information that indicates a first value and to which attribute information of the first value is linked; reading the first value information indicated in the transaction data stored in the distributed ledger; performing a calculation process of calculating second value information indicating a second value, by performing, for the first value information that has been read, an operation in which the attribute information linked to the first value information is factored; and outputting the second value information calculated in the calculation process.

According to this aspect, after the first value information is stored into the distributed ledger, the information processing system outputs the second value information calculated based on the attribute information of the first value. Since the second value information is calculated by an operation in which the attribute information of the first value is factored, the second value information calculated can be appropriate value information in which the attribute information of the first value has been factored. When a user intends to have the first value information managed using the distributed ledger, the user may consider, depending on the magnitude of the second value calculated in the future, stopping the use of the distributed ledger to manage the first value information and as a result, the power consumption required for the distributed ledger to store the value information may be reduced. Thus, the information processing system can reduce the power consumption required for the distributed ledger to store the value information.

(2) In the information processing method described in (1), the attribute information includes a date and time of generation of the first value, and in the calculating of the second value information, the second value information is calculated using a calculation algorithm for calculating the second value information by using, as input, a current date and time and the date and time of generation included in the attribute information linked to the first value information that has been read.

According to this aspect, the information processing system uses the calculation algorithm that uses the date and time of generation of the first value and the current date and time in order to calculate the second value information and therefore, the information processing system can calculate the second value information more easily. Furthermore, the second value information calculated is appropriate second value information in which the date and time of generation and the current date and time have been factored for the first value information. Using the second value information calculated as described above, the information processing system can more properly reduce the power consumption required for the distributed ledger to store the value information. Thus, the information processing system can more properly reduce the power consumption required for the distributed ledger to store the value information.

(3) In the information processing method described in (2), in the calculating of the second value information, the second value information indicating the second value that decreases with time since the date and time of generation included in the attribute information linked to the first value information that has been read is calculated.

According to this aspect, the information processing system calculates the second value information indicating the second value that decreases with time since the date and time of generation of the first value, and thus the information processing system can properly calculate, for a value that decreases with time since generation, the value information indicating said value. Using the second value information calculated as described above, the information processing system can more properly reduce the power consumption required for the distributed ledger to store the value information. Thus, the information processing system can more properly reduce the power consumption required for the distributed ledger to store the value information.

(4) In the information processing method described in any one of (1) to (3), the first value information is owned by a user, and the information processing method further incudes: performing a transfer process of transferring the second value information calculated in the calculation process from a manager to the user.

According to this aspect, the information processing system can transfer the second value information to a user when the second value information is calculated for the first value. Thus, the information processing system can allow the user to own appropriate value information while reducing the power consumption required for the distributed ledger to store the value information.

(5) In the information processing method described in (4), the transfer process further includes: a process of storing, into the distributed ledger, transaction data indicating transfer of the first value information from the user to the manager or transaction data indicating deletion of the first value information.

According to this aspect, when the second value information is transferred to the user, the information processing system causes the first value information referred to in the calculation of the second value information to be transferred to the manager or deletes the first value information referred to in the calculation of the second value information. This makes it possible to prevent overlapping calculation of the second value information based on said first value information referred to for the second value information transferred to the user, meaning that the management of the value information can be made appropriate. Thus, the information processing system can make the management of the value information appropriate while reducing the power consumption required for the distributed ledger to store the value information.

(6) In the information processing method described in (1), the first value includes an environmental value of power generation from renewable energy, and the first value information includes an amount of electric power obtained by the power generation.

According to this aspect, the information processing system can reduce the power consumption when the environmental value of the power generation from the renewable energy is stored into the distributed ledger.

(7) In the information processing method described in (6), the attribute information includes a date and time of power generation when the power generation occurs, and in the calculating of the second value information, the second value information indicating the second value that decreases with time since the date and time of power generation included in the attribute information linked to the first value information that has been read is calculated.

According to this aspect, the information processing system calculates the second value information indicating the second value that decreases with time since the date and time of power generation from the renewable energy, and thus the information processing system can properly calculate, for a value that decreases with time since power generation, the value information indicating said value. Using the second value information calculated as described above, the information processing system can more properly reduce the power consumption required for the distributed ledger to store the value information. Thus, the information processing system can more properly reduce power generation when the acknowledged environmental value of power generation from the renewable energy is stored into the distributed ledger.

(8) In the information processing method described in (6) or (7), the attribute information includes a power generation location where the power generation occurs and a consumption location where the electric power obtained by the power generation is consumed, and in the calculating of the second value information, the second value information indicating the second value that decreases with an increase in a separation distance is calculated, the separation distance being a distance between the power generation location and the consumption location included in the attribute information linked to the first value information that has been read.

According to this aspect, the information processing system calculates the second value information indicating the second value that decreases with an increase in the separation distance between a power generation location where power generation from the renewable energy occurs and a consumption location where electric power obtained by the power generation is consumed, and thus the information processing system can properly calculate, for a value that decreases with an increase in the separation distance between the power generation location and the consumption location, the value information indicating said value. Using the second value information calculated as described above, the information processing system can more properly reduce the power consumption required for the distributed ledger to store the value information. Thus, the information processing system can more properly reduce power generation when the acknowledged environmental value of power generation from the renewable energy is stored into the distributed ledger.

(9) In the information processing method described in any one of (1) to (8), the first value information is a virtual currency or a token managed using the distributed ledger, and the second value information is legal tender or is a virtual currency or a token different from the virtual currency or the token that is the first value information.

According to this aspect, using a virtual currency or a token as the first value information and using, as the second value information, legal tender or a virtual currency or a token that is different from said virtual currency or said token managed using said distributed ledger, the information processing system can reduce the power consumption required for the distributed ledger to store the value information.

(10) In the information processing method described in any one of (1) to (9), in the performing of the calculation process, the calculation process is performed according to a smart contract by using the distributed ledger.

According to this aspect, by automatically performing the calculation process according to the smart contract using the distributed ledger, the information processing system can efficiently perform the calculation process while preventing substantive tampering with information. Thus, the information processing system can more efficiently reduce the power consumption required for the distributed ledger to store the value information while preventing substantive tampering with information.

(11) An information processing system includes: a ledger processor that stores, into a distributed ledger, transaction data indicating first value information that indicates a first value and to which attribute information of the first value is linked, and reads the first value information indicated in the transaction data stored in the distributed ledger; and an executor that performs a calculation process of calculating second value information indicating a second value, by performing, for the first value information that has been read by the ledger processor, an operation in which the attribute information linked to the first value information is factored, and outputs the second value information calculated in the calculation process.

According to this aspect, advantageous effects are produced that are substantially the same as those produced by the above-described information processing method.

(12) A program causes one or more computers to execute the information processing method described in (1).

According to this aspect, advantageous effects are produced that are substantially the same as those produced by the above-described information processing method.

Note that these general and specific aspects may be implemented using a system, a device, an integrated circuit, a computer program, or a computer-readable recording medium such as compact disc read-only memory (CD-ROM), or any combination of systems, devices, integrated circuits, computer programs, or recording media.

Hereinafter, an embodiment will be specifically described with reference to the drawings.

Note that each embodiment described below shows a general or specific example. The numerical values, shapes, materials, structural elements, the arrangement and connection of the structural elements, steps, the processing order of the steps, etc., shown in the following embodiment are mere examples, and are not intended to limit the present invention. Among the structural elements in the following embodiment, structural elements not recited in any one of the independent claims which indicate the broadest concepts will be described as optional structural elements.

### [Embodiment]

In the present embodiment, a description will be provided of an information processing method and an information processing system in which the power consumption required for a distributed ledger to store value information is reduced.

FIG. 1 is a schematic diagram illustrating the overall configuration of information processing system 1 according to the present embodiment. Information processing system 1 is one example of a system that reduces the power consumption required for the distributed ledger to store the value information.

As illustrated in Fig. 1, information processing system 1 includes processing device 10, power generation device 11, distributed ledger system 20, and conversion device 30. Furthermore, information processing system 1 may include management device 40. There are cases where terminal T is connected to information processing system 1. Information processing system 1 may further include terminal T. Said devices are connected to network N and can perform communication via network N.

Processing device 10 is an information processing device that performs processing related to value information (also referred to as the first value information) indicating an environmental value (also referred to as the first value) of power generation performed by power generation device 11 from renewable energy (also referred to simply as the power generation). Specifically, processing device 10 transmits an issuance request for requesting the issuance of the first value information indicating the environmental value of power generation performed by power generation device 11. Processing device 10 is owned by user U1. Note that an example where the first value information indicates the environmental value is described herein, but the first value information may indicate another value.

For example, the first value information may be the value of content. The value of content may vary according to the balance between demand and supply of the content. The first value information may be general information such as traffic information or disaster information. The general information may indicate value that is reduced over time or may indicate value that increases when the amount in circulation is small.

Furthermore, an example where the first value information is a token that is an information piece managed using distributed ledger 211 will be described (later). Note that processing device 10 is capable of making a transfer request or a conversion request as with terminal T (to be described later).

The information processing device is a device including a communication interface, a processor (a central processing unit (CPU) or the like), a storage device, and the like; for example, the information processing device is a personal computer, a smartphone, a tablet, or the like. This also applies to the following description.

Power generation device 11 is a power generation device that generates electric power from renewable energy, and one example thereof is a photovoltaic device. The electric power obtained as a result of power generation by power generation device 11 is green electricity. Note that power generation device 11 may be a device that generates electric power from other renewable energy (for example, wind energy or biomass). Power generation device 11 is owned by user U1.

Distributed ledger system 20 is a system that stores information by using a distributed ledger. In the distributed ledger, for example, a record of issuance of a token representing an environmental value and a record of transaction of the token are stored. Furthermore, distributed ledger system 20 can perform a process according to a smart contract by using the distributed ledger. Using the distributed ledger, distributed ledger system 20 performs the process of issuing a token representing an environmental value or converting the token into other value information (also referred to as the second value information).

Distributed ledger system 20 includes ledger servers 21, 22, 23 (also referred to as ledger servers 21, etc.) as a server group holding the distributed ledger. When at least one of ledger servers 21, etc., receives transaction data, the transaction data is shared by all ledger servers 21, etc., and is stored into the distributed ledger. Note that the number of ledger servers included in the sever group is not limited to three and may be greater than three.

Ledger server 21 is a server that is a computer that holds and manages the distributed ledger. Ledger server 21, which holds the distributed ledger, updates the distributed ledger in synchronization with other ledger servers 22, etc.

Each of ledger servers 22, 23 is substantially the same server as ledger server 21 and operates independently of ledger server 21.

Terminal T is an information processing device that performs processing related to a token that is first value information. Terminal T is capable of making a transfer request for requesting the transfer of a token. Furthermore, terminal T is capable of making a conversion request for requesting the conversion of a token into the second value information. Terminal T is owned by user U2.

Conversion device 30 is an information processing device that converts a token that is the first value information into the second value information. The second value information indicates a second value. When conversion device 30 receives a conversion request for requesting the conversion of a token into the second value information, conversion device 30 obtains, from distributed ledger system 20, the second value information calculated based on the token, and performs the transfer process of transferring the second value information to the user.

Management device 40 is an information processing device that provides information relevant to the calculation of the second value information to distributed ledger system 20. Management device 40 can transmit an algorithm for calculating the second value information (also referred to as a calculation algorithm) to distributed ledger system 20 as the information relevant to the calculation of the second value information. Furthermore, management device 40 can transmit, to distributed ledger system 20, information relevant to the environmental value indicated by the token (also referred to as relevant information). Management device 40 can be an information processing device owned by a business operator or the like that manages and trades a token representing an environmental value.

Note that management device 40 is not a device essential to information processing system 1. Details of the configuration of management device 40 will be described in Variation 1 or Variation 2 (to be described later).

The following description assumes that user U1 obtains a token as the first value information indicating the value of power generation by power generation device 11 from renewable energy and subsequently, said token is transferred from user U1 to user U2, and user 2 converts said token into "yen", which is legal tender, as the second value information.

FIG. 2 is a block diagram illustrating the functional configuration of processing device 10 according to the present embodiment.

As illustrated in FIG. 2, processing device 10 includes communicator 101, obtainer 102, and processor 103 as function units. At least some of the function units included in processing device 10 are realized by a processor (for example, a central processing unit (CPU)) in processing device 10 executing a program using memory.

Communicator 101 is a communication interface connected to network N so as to allow communication therebetween. Communicator 101 may be a communication interface that complies with a communication standard of wired communication (for example, Ethernet (registered trademark) or the like) or may be a communication interface that complies with a communication standard of wireless communication (for example, Wi-Fi (registered trademark) or the like or a mobile communication system (the 3^{rd} generation (3G), the 4^{th} generation (4G), the 5^{th} generation (5G), or the like)). Communicator 101 is used by a function unit of processing device 10 to communicate with another device.

Obtainer 102 obtains the amount of electric power generated by power generation device 11 (also referred to as the amount of power generation). For example, obtainer 102 is connected to a power line to which the electric power generated by power generation device 11 is output, and can obtain the amount of power generation by directly measuring the electric power flowing through the power line. Furthermore, obtainer 102 may obtain, as information via a communication line, the amount of electric power output from power generation device 11. In this case, a device that transmits the amount of power generation as information may be power generation device 11 or may be other devices.

Furthermore, obtainer 102 obtains attribute information of the power generation of power generation device 11. The attribute information may include: information indicating the date and time of power generation of power generation device 11; information indicating a power generation location where the power generation of power generation device 11 occurs; information indicating a feature of a power generation location where the power generation of power generation device 11 occurs; information indicating a consumption location where electric power generated by power generation device 11 is consumed; information indicating an energy source of the power generation of power generation device 11; or information indicating the likelihood of the amount of electric power generated by power generation device 11 (that is, the amount of power generation).

The information indicating a power generation location where the power generation of power generation device 11 occurs may be position information indicating a position at which power generation device 11 is located and more specifically the latitude and longitude, the address, or the like of a position at which power generation device 11 is located. A unit of address designation may be a unit of country, a unit of prefecture, a unit of block, or the like. This also applies to the following description.

The information indicating a feature of a power generation location where the power generation of power generation device 11 occurs may include: information indicating an environment or a natural environment (for example, an urban area, a suburb, a desert, a forest, or a mountainous area) at a location where power generation device 11 is located; and information indicating a feature relevant to human activities at said location (for example, a location where there is a relatively high tendency for people to gather, a location where there is a relatively low tendency for people to gather, a location where there are a relatively large number of people, or a location where there are a relatively smaller number of people).

The information indicating a consumption location where the electric power generated by power generation device 11 is consumed may be position information indicating a consumption location where the electric power generated by power generation device 11 is consumed and more specifically the latitude and longitude, the address, or the like of a position at which a device or a facility (also referred to as a device or the like) that has consumed the electric power generated by power generation device 11 is located. For example, when it is clear according to measurement, etc., of the amount of electric power that the electric power generated by power generation device 11 has been consumed by a specific device or the like, a position at which said specific device or the like is located can be defined as the consumption location. Specifically, when it is clear according to measurement, etc., of the amount of electric power that the electric power generated by power generation device 11 has not passed through a distribution network, but has flown to a facility connected to power generation device 11 and has been consumed by said facility (upon so-called private power generation), a position at which said facility is located can be defined as the consumption location.

Note that the consumption location where the electric power generated by power generation device 11 is consumed is not limited to the position information of a device or the like that has consumed said electric power actually (in other words, physically exactly) and may be a location that is managed by an information system or the like as the consumption location where the electric power generated by power generation device 11 is consumed. For example, when power generation device 11 and business establishment A are connected to the same distribution network, the information system or the like can provide management (or form a contract or an agreement) such that business establishment A consumes the electric power generated by power generation device 11 and supplied to the distributed network. In this case, a consumption location where the electric power generated by power generation device 11 is consumed can be set to business establishment A.

The information indicating an energy source of the power generation of power generation device 11 may be information indicating a kind such as sunlight, wind energy, or biomass.

The information indicating the likelihood of the amount of power generation of power generation device 11 can be 100% (that is, the maximum likelihood), for example, when the amount of power generation obtained by obtainer 102 is the amount of power generation obtained by directly measuring the electric power flowing through the power line. Furthermore, when the amount of power generation obtained by obtainer 102 is the amount of power generation obtained as information via the communication line, the information indicating the likelihood can be a value less than 100%. In this case, when the transmission source of the amount of power generation obtained by obtainer 102 is power generation device 11, the information indicating the likelihood may have a relatively large value (for example, 80% to 90%), and when the transmission source is a device different from power generation device 11 (or is unknown), the information indicating the likelihood may have a relatively small value (for example, 10% to 20%). This is because there are cases where the amount of power generation transmitted by power generation device 11 is evaluated as being more authentic and there are cases where the amount of power generation transmitted by a device different from power generation device 11 is evaluated as being less authentic.

Processor 103 performs the processing related to the value information indicating the environmental value of power generation of power generation device 11.

Processor 103 performs the process of requesting the issuance of a token which is the first value information indicating the environmental value of power generation of power generation device 11. Specifically, using the amount of power generation and the attribute information obtained by obtainer 102, processor 103 generates transaction data for requesting the issuance of a token (also referred to as the issuance request transaction data), and transmits the issuance request transaction data to distributed ledger system 20. When distributed ledger system 20 issues a token, processor 103 obtains token ID of the issued token.

Furthermore, processor 103 can perform the process of requesting the conversion of the token into the second value information. Specifically, processor 103 transmits, to conversion device 30, a conversion request representing a request for converting the token into the second value information. Thus, user U1 who is the owner of processing device 10 can receive legal tender transferred thereto that corresponds to the token.

FIG. 3 is a block diagram illustrating the functional configuration of ledger server 21 according to the present embodiment. FIG. 4 is an explanatory diagram illustrating an example of the token according to the present embodiment. FIG. 5 is an explanatory diagram illustrating an example of the attribute information according to the present embodiment. FIG. 6 is an explanatory diagram illustrating an example of a calculation process according to the present embodiment. FIG. 7 is an explanatory diagram illustrating an example of currency information according to the present embodiment. With reference to FIG. 3 to FIG. 7, the configuration and functions of ledger server 21 will be described.

Ledger server 21 includes communicator 201, ledger processor 202, executor 203, and storage 204 as function units. At least some of the function units included in ledger server 21 are realized by a processor (for example, a CPU) in ledger server 21 executing a program using memory.

Communicator 201 is a communication interface connected to network N so as to allow communication therebetween. Communicator 201 may be a communication interface that complies with a communication standard of wired communication (for example, Ethernet (registered trademark) or the like) or may be a communication interface that complies with a communication standard of wireless communication (for example, Wi-Fi (registered trademark) or the like or a mobile communication system (3G, 4G, 5G, or the like)). Communicator 201 is used by a function unit of ledger server 21 to communicate with another device.

Ledger processor 202 performs the processing related to distributed ledger 211 and the transaction data. Specifically, when ledger processor 202 receives the transaction data from processing device 10, conversion device 30, management device 40, or the like, ledger processor 202 performs control to verify a digital signature included in the received transaction data and store, into distributed ledger 211 held by storage 204, the transaction data that has been successfully verified. In storing the transaction data into distributed ledger 211, ledger processor 202 can perform control to generate a block including the transaction data to be stored, and when ledger processor 202 and ledger processors 202 of ledger servers 22, 23, which are other ledger servers, reach agreement on the generated block, store said block into distributed ledger 211.

Executor 203 performs information processing. For example, executor 203 can perform information processing by executing a smart contract using distributed ledger 211. Note that when executor 203 does not use a smart contract, executor 203 performs information processing according to a regular program code.

Executor 203 performs the process of issuing the first value information as said information processing according to a smart contract. The first value information, which is value information managed by distributed ledger system 20, may be a virtual currency (generally referred to as a crypto-asset) managed by distributed ledger system 20 or may be a token (that is, value information other than the virtual currency) managed by distributed ledger system 20. An example where the first value information is a token is described herein, but this is not limiting.

When executor 203 receives the issuance request transaction data from processing device 10, executor 203 issues a token as the first value information. The token as the first value information represents the environmental value (corresponding to the first value) of power generation by power generation device 11 from renewable energy. Specifically, the first value information includes the amount of electric power obtained by the power generation of power generation device 11.

In issuing a token, executor 203 issues a token to which the attribute information included in the issuance request transaction data, that is, the attribute information of the power generation of power generation device 11, is linked. The token is issued as a result of transaction data that indicates the issuance of a token (also referred to as the issuance transaction data) being stored into distributed ledger 211.

The attribute information includes, for example, the date and time of generation of the first value. When the first value is the power generation of power generation device 11, the date and time of generation of the first value may be regarded as being the same as the date and time of the power generation of power generation device 11.

FIG. 4 illustrates an example of the token. An entry in one row included in FIG. 4 corresponds to one token. The token includes information indicating token ID, the date and time of issuance, and a token amount.

The token ID is an identifier that can uniquely identify said token (for example, "001").

The date and time of issuance is information indicating the date and time of the issuance of said token (for example, "2023/1/1 11:00:00").

The token amount is information indicating the amount of the environmental value indicated by said token (for example, "5").

FIG. 5 illustrates an example of the attribute information. An entry in one row included in FIG. 5 corresponds to one item of the attribute information. The attribute information includes: token ID at link destination; date and time of power generation; a power generation location; a consumption location; and an energy source.

The token ID at link destination is the token ID of a token to which said attribute information is linked (for example, "001").

The data and time of power generation is information indicating the date and time of power generation of power generation device 11 (for example, "2023/1/1 10:00:00").

The power generation location is information indicating a location where the environmental value indicated by the token to which said attribute information is linked is created, that is, a location where power generation device 11 generates electric power (for example, "P1").

The consumption location is information indicating a location where the electric power obtained by the power generation corresponding to the environmental value indicated by the token to which said attribute information is linked is consumed (for example, "P2").

The energy source is information indicating the energy source of the power generation corresponding to the environmental value indicated by the token to which said attribute information is linked (for example, "sunlight"). The energy source may be wind energy, biomass, or the like other than sunlight.

Furthermore, executor 203 performs, for the token, an operation in which the attribute information linked to the token is factored, as the aforementioned information processing, and thus executes, according to a smart contract, the process of calculating value information different from the token (corresponding to the second value information) (also referred to as the calculation process). The second value information is a virtual currency or a token or legal tender (for example, yen or dollar) different from the first value information. An example where the second value information is the legal tender of Japan, i.e., "yen", is described herein, but this is not limiting. The second value information indicates the environmental value (also referred to as the second value). When executor 203 receives calculation request transaction data from processing device 10, executor 203 calculates the second value information from the token as described above, and transmits the calculated second value information to processing device 10.

When the attribute information includes the date and time of generation of the first value, executor 203 can calculate the second value information by using a calculation algorithm for calculating the second value information by using, as input, the current date and time and the date and time of generation included in the attribute information. More specifically, by using the calculation algorithm, executor 203 can calculate the second value information indicating the second value that decreases with time since the date and time of generation included in the attribute information. By using the calculation algorithm, executor 203 may calculate the second value information indicating the second value that is proportional to the reciprocal of the amount of time elapsed, may calculate the second value information indicating that the second value is zero when the current date and time is at least one year after the date and time of generation, or may calculate the second value information indicating that the second value is zero when an annual period to which the current date and time belongs is after an annual period to which the date and time of generation belongs, for example. The annual period is a year-long period and may be the period from January to December of the same year or may be the period from April to March of the next year.

Note that when the first value is the acknowledged environmental value of the power generation of power generation device 11, the date and time of generation may be regarded as being the same as the date and time of power generation as described above, meaning that the date and time of power generation of power generation device 11 may be used as the date and time of generation of the first value. In this case, it can be said that executor 203 calculates the second value information indicating the second value that decreases with time since the date and time of power generation included in the attribute information.

Furthermore, when the attribute information includes the date and time of power generation of power generation device 11 as the date and time of generation of the first value, executor 203 may calculate, by using the calculation algorithm, the second value information that differs depending on the time slot of the power generation. For example, when the date and time of power generation is included in the daytime slot (for example, 10 am to 5 pm), executor 203 may calculate the second value information indicating the second value that is higher than that when the date and time of power generation is included in the night-time slot (for example, 11 pm to 7 am the next day).

Furthermore, when the attribute information includes the date and time of power generation of power generation device 11 as the date and time of generation of the first value, executor 203 may calculate the second value information by using the calculation algorithm according to a comparison made with the amount of average power usage in the time slot including the date and time of said power generation. For example, executor 203 can calculate the second value information indicating the second value that is proportional to a value obtained by dividing the amount of power generation of power generation device 11 by the amount of annual average power usage.

Furthermore, when the attribute information includes the consumption location where the electric power is consumed, executor 203 may calculate the second value information by using the calculation algorithm according to a feature of the consumption location. For example, when the consumption location is a location where there is a relatively high tendency for people to gather (for example, an urban area, an area around a transit station, or a business district), executor 203 may calculate the second value information indicating the second value that is higher than that calculated otherwise. Furthermore, when the consumption location is a location where there is a relatively low tendency for people to gather (for example, a desert, a mountainous area, or a suburb), executor 203 may calculate the second value information indicating the second value that is lower than that calculated otherwise.

Furthermore, when the attribute information includes the power generation location and the consumption location, executor 203 may calculate, by using the calculation algorithm, the second value information indicating the second value that decreases with an increase in the separation distance between the power generation location and the consumption location. Furthermore, when the separation distance between the power generation location and the consumption location is less than a predetermined distance (for example, upon private power generation), executor 203 may calculate, by using the calculation algorithm, the second value information indicating the second value that is higher than that calculated otherwise.

Furthermore, when the attribute information includes the energy source of the power generation, executor 203 may calculate, by using the calculation algorithm, the second value information that differs depending on the energy source. For example, when the energy source of the power generation of power generation device 11 is sunlight, executor 203 may calculate the second value information indicating the second value that is higher than that calculated when the energy source is wind energy. Executor 203 may calculate the second value information indicating the second value that increases with a reduction in the power generation cost or the maintenance cost for each energy source of the power generation of power generation device 11.

Furthermore, when the attribute information includes the likelihood of the amount of power generation, executor 203 may calculate, by using the calculation algorithm, the second value information indicating the second value that increases with an increase in the likelihood of the amount of power generation.

The calculation process will be described with reference to FIG. 6. The following will describe the calculation process in which token 51 is converted into currency information, which is one example of the second value information.

Token 51 illustrated in FIG. 6 corresponds to the token illustrated in FIG. 4. Token 51 is a token defined by the token amount "5" (that is, five tokens).

Attribute information 53 illustrated in FIG. 6 corresponds to the attribute information illustrated in FIG. 5. Attribute information 53 is attribute information indicating the power generation defined by the date and time of power generation "2023/1/1 10:00:00."

Executor 203 inputs token 51 and attribute information 53 to calculation algorithm 55 and thus calculates currency information 57 as the second value information.

Calculation algorithm 55 may include a mathematical operation including the process of multiplying token amount T by value V determined based on attribute information 53, the process of dividing token amount T by value V, the process of adding value V to token amount T, or the process of subtracting value V from token amount T, for example. Furthermore, calculation algorithm 55 may include a determination process or a repetitive process (also referred to as an iterative process).

FIG. 7 illustrates currency information as an example of the value information calculated by executor 203 using calculation algorithm 55.

As illustrated in FIG. 7, the currency information includes a type and a value amount.

The type is information indicating the type of the currency information (for example, "yen"). The type may be the type of legal tender or the type of a virtual currency or a token.

The value amount is the amount of a value indicated in the value information. When the type of the current information is "yen," for example, the value amount is the amount of the currency expressed in units of "yen" (for example, "5,000 yen").

Storage 204 is a storage device that stores information. In storage 204, distributed ledger 211 is stored. Storage 204 is realized by a non-volatile storage device (solid state drive (SSD) or hard disk drive (HDD)) or the like.

Distributed ledger 211 stores data having a structure in which blocks including one or more transaction data are linked together in the form of a chain. The one or more transaction data stored in distributed ledger 211 includes the issuance request transaction data, the issuance transaction data, or the calculation request transaction data. The transaction data includes transaction data including a contract code of a smart contract, transaction data including a command to execute a smart contract, or transaction data including other information.

FIG. 8 is a block diagram illustrating the functional configuration of conversion device 30 according to the present embodiment.

As illustrated in FIG. 8, conversion device 30 includes communicator 301 and processor 302 as function units. At least some of the function units included in conversion device 30 are realized by a processor (for example, a CPU) in conversion device 30 executing a program using memory.

Communicator 301 is a communication interface connected to network N so as to allow communication therebetween. Communicator 301 may be a communication interface that complies with a communication standard of wired communication (for example, Ethernet (registered trademark) or the like) or may be a communication interface that complies with a communication standard of wireless communication (for example, Wi-Fi (registered trademark) or the like or a mobile communication system (3G, 4G, 5G, or the like)). Communicator 301 is used by a function unit of conversion device 30 to communicate with another device.

When processor 302 receives a token conversion request, processor 302 transmits, to distributed ledger system 20, transaction data for requesting calculation of the second value information regarding a token to be converted (also referred to as the calculation request transaction data). Assume herein that a transmitter who transmits the conversion request is terminal T owned by user U2. Furthermore, processor 302 obtains, from distributed ledger system 20, the second value information regarding the token that has been calculated as a result of the transmission of the calculation request transaction data.

When processor 302 obtains the second value information, processor 302 performs the transfer process of transferring the currency corresponding to the second value information from the manager of conversion device 30 to user U2. The transfer process includes the process of adding the amount of the currency to the balance in the account of user U2 and subtracting the amount of the currency from the balance in the account of the manager of conversion device 30.

When processor 302 performs the transfer process, processor 302 transmits, to distributed ledger system 20, transaction data indicating a request for deleting the token that had been a subject to be converted (also referred to as the deletion request transaction data). Note that the deletion of the token is regarded as one example of the aftertreatment of the conversion of the token into the currency. As another example of the aftertreatment, processor 302 may transmit, to distributed ledger system 20, transaction data indicating a request for transferring the token to the manager of distributed ledger system 20 (also referred to as the transfer request transaction data).

FIG. 9 is a block diagram illustrating the functional configuration of management device 40 according to the present embodiment.

As illustrated in FIG. 9, management device 40 includes communicator 401 and processor 402 as function units. At least some of the function units included in management device 40 are realized by a processor (for example, a CPU) in management device 40 executing a program using memory.

Communicator 401 is a communication interface connected to network N so as to allow communication therebetween. Communicator 401 may be a communication interface that complies with a communication standard of wired communication (for example, Ethernet (registered trademark) or the like) or may be a communication interface that complies with a communication standard of wireless communication (for example, Wi-Fi (registered trademark) or the like or a mobile communication system (3G, 4G, 5G, or the like)). Communicator 401 is used by a function unit of management device 40 to communicate with another device.

Processor 402 can transmit transaction data including the calculation algorithm to distributed ledger system 20. In this case, in performing the calculation process of calculating the second value information regarding the token, executor 203 calculates the second value information by using the calculation algorithm included in said transaction data.

Furthermore, in the case where ledger server 21 (specifically, executor 203) performs the calculation process of calculating the second value information regarding the token, processor 402 may transmit, to distributed ledger system 20, information to be used in the calculation (also referred to as the relevant information). The relevant information may be, for example, a numerical value or information included in the calculation algorithm and, more specifically, a numerical value or information that is necessary to obtain value V from the attribute information. In performing the calculation process of calculating the second value information, executor 203 calculates the second value information by using the relevant information and the calculation algorithm transmitted by processor 402.

The following will describe the processing performed by information processing system 1 configured as described above.

FIG. 10 is a flowchart illustrating an example of the processing performed by information processing system 1 according to the present embodiment. The flowchart illustrated in FIG. 10 shows an outline of the processing performed by information processing system 1.

In Step S1, information processing system 1 stores the issuance transaction data into distributed ledger 211. The process in Step S1, which is a process to be performed as a result of the generation of an environmental value by the power generation of power generation device 11, corresponds to the process of issuing a token representing the environmental value. The issuance transaction data indicates the environmental value of the power generation of power generation device 11 (that corresponds to the first value) and indicates the first value information to which the attribute information of said environmental value is linked.

In Step S2, information processing system 1 reads the token from distributed ledger 211 and performs the calculation process on the read token. Specifically, by referring to the transaction data stored in distributed ledger 211, information processing system 1 reads the token issued in Step S1. The calculation process is the calculation process of calculating the second value information by performing, for the token, an operation in which the attribute information linked to the token is factored. Furthermore, information processing system 1 can output the second value information calculated in the calculation process.

FIG. 11 is a sequence chart illustrating the first example of the processing performed by information processing system 1 according to the present embodiment. A series of processes illustrated in FIG. 11 are details of the process included in Step S1 in FIG. 10.

Assume that before the execution of Step S101, power generation device 11 has generated electric power from renewable energy.

In Step S101, processing device 10 obtains the amount of electric power obtained by the power generation of power generation device 11 (that is, the amount of power generation) and the attribute information of the power generation of power generation device 11.

In Step S102, processing device 10 generates the issuance request transaction data including the amount of power generation and the attribute information obtained in Step S101, and transmits the generated issuance request transaction data to distributed ledger system 20. Distributed ledger system 20 receives the issuance request transaction data transmitted thereto.

Note that the expression "a device transmits information or data to distributed ledger system 20" means that the device transmits the information or the data to one of ledger servers 21, etc., included in distributed ledger system 20, and herein means as one example that the device transmits the information or the data to ledger server 21.

In Step S103, distributed ledger system 20 stores, into distributed ledger 211, the issuance request transaction data received in Step S102.

In Step S104, distributed ledger system 20 issues a token by using the issuance request transaction data as a result of storing the issuance request transaction data into distributed ledger 211 in Step S103. The issuing of the token includes storing the issuance transaction data indicating the issuance of the token into distributed ledger 211.

Specifically, distributed ledger system 20 converts, into a token amount, the amount of power generation included in the issuance request transaction data received in Step S102, and issues a token having the token amount obtained by the conversion. As the rate of conversion from the amount of power generation into a token amount, a rate of conversion determined in advance by a manager who manages tokens can be used. The attribute information of the power generation included in the issuance request transaction data received in Step S102 is linked to the token that is issued.

In Step S105, distributed ledger system 20 transmits, to processing device 10, the token ID of the token issued in Step S104. Processing device 10 receives the token ID transmitted thereto. Note that distributed ledger system 20 may transmit said token ID in response to the receipt of the issuance request transaction data in Step S102.

Note that the expression "distributed ledger system 20 transmits information or data to a device" means that one of ledger servers 21, etc., included in distributed ledger system 20 transmits the information or the data, and herein means as one example that ledger server 21 transmits the information or the data.

At a point in time when Step S105 is performed, the issued token is owned by user U1. After this, said token can be traded among users; for example, said token can be transferred from user U1 to user U2. The transfer of a token is realized by storing transaction data indicating the transfer of the token (transfer transaction data) into distributed ledger 211. The transfer transaction data may be generated and transmitted to distributed ledger system 20 by processing device 10 or may be generated and transmitted to distributed ledger system 20 by terminal T.

The processes in Steps S104 to S105 may be performed according to a smart contract as a result of the issuance request transaction data being stored into distributed ledger 211 in Step S103. In this case, the issuance request transaction data includes a command to cause the execution of the smart contract for performing said processes, and executor 203 can perform said processes according to said command as a result of the issuance request transaction data being stored into distributed ledger 211 (Step S103).

Note that in Step S102, processing device 10 may generate issuance request transaction data including the token amount of the token to be issued instead of the amount of power generation. In this case, processing device 10 is required to have a rate of conversion for converting an amount of power generation into a token amount. The token amount of the token to be issued that is included in the issuance request transaction data may be the token amount obtained by processing device 10 converting the amount of power generation at said rate of conversion. When processing device 10 generates the issuance request transaction data including said token amount and transmits the issuance request transaction data to distributed ledger system 20 in Step S102, distributed ledger system 20 issues a token having the token amount included in the received issuance request transaction data in Step S104.

FIG. 12 is a sequence chart illustrating the second example of the processing performed by information processing system 1 according to the present embodiment. A series of processes illustrated in FIG. 12 are details of the process included in Step S2 in FIG. 10.

The following description assumes that after Step S105 in FIG. 11 is performed, the token is transferred from user U1 to user U2 and thus the token is owned by user U2. Note that if the token is not transferred, said token is owned by user U1. In this case, processing device 10 can perform the following process on the assumption that processing device 10 includes substantially the same functions as terminal T.

In Step S201, terminal T transmits conversion request information to conversion device 30. The conversion request information transmitted includes the token ID of the token to be converted. Conversion device 30 receives the conversion request information transmitted thereto.

In Step S202, conversion device 30 transmits calculation request transaction data to distributed ledger system 20 as a result of receiving the conversion request information in Step S201. The calculation request transaction data transmitted includes the token ID of the token to be converted. Distributed ledger system 20 receives the calculation request transaction data transmitted thereto. Note that the calculation request transaction data may have been encrypted. Distributed ledger system 20 transmits request information for requesting for a decryption key to conversion device 30 that has transmitted the encrypted calculation request transaction data, thereby obtains the decryption key from conversion device 30, and decrypts the encrypted calculation request transaction data with the decryption key.

In Step S203, distributed ledger system 20 stores, into distributed ledger 211, the calculation request transaction data received in Step S202.

In Step S204, distributed ledger system 20 reads the token having the token ID included in the calculated request transaction data from distributed ledger 211. The read token is the token indicated in the issuance transaction data stored in distributed ledger 211 in Step S104.

In Step S205, by using the calculation algorithm, distributed ledger system 20 calculates the second value information regarding the token that has been read in Step S204.

In Step S206, distributed ledger system 20 transmits the second value information calculated in Step S205 to conversion device 30. Conversion device 30 receives the second value information transmitted thereto. Note that distributed ledger system 20 may transmit said second value information in response to the receipt of the calculation request transaction data in Step S202.

In Step S207, conversion device 30 performs the transfer process of transferring, to user U2, the currency in the amount indicated in the second value information received in Step S206. The transfer process includes the process of adding, to the balance in the account of user U2, the amount of the currency (in other words, the amount of value) to be transferred, and subtracting the amount of the currency from the balance in the account of the manager of conversion device 30.

In Step S208, as one example of the aftertreatment, conversion device 30 generates transaction data indicating a request for deleting the token (also referred to as the deletion request transaction data) and transmits the deletion request transaction data to distributed ledger system 20. Distributed ledger system 20 receives the deletion request transaction data transmitted thereto.

In Step S209, distributed ledger system 20 stores, into distributed ledger 211, the deletion request transaction data received in Step S208.

In Step S210, distributed ledger system 20 deletes the token by using the deletion request transaction data as a result of storing the deletion request transaction data into distributed ledger 211 in Step S209. The deleting of the token includes storing deletion transaction data indicating the deletion of the token into distributed ledger 211. Furthermore, the deleting of the token may include deleting information regarding the token from distributed ledger 211 or the memory.

The processes in Steps S204 to S206 may be performed according to a smart contract as a result of the calculation request transaction data being stored into distributed ledger 211 in Step S203. In this case, the calculation request transaction data includes a command to cause the execution of the smart contract for performing said processes, and executor 203 can perform said processes according to said command as a result of the calculation request transaction data being stored into distributed ledger 211 (Step S203).

The process in Step S210 may be performed according to a smart contract as a result of the deletion request transaction data being stored into distributed ledger 211 in Step S209. In this case, the deletion request transaction data includes a command to cause the execution of the smart contract for performing said process, and executor 203 can perform said process according to said command as a result of the deletion request transaction data being stored into distributed ledger 211 (Step S209).

As described above, after the first value information is stored into distributed ledger 211, information processing system 1 outputs the second value information calculated based on the attribute information of the first value. Since the second value information is calculated by an operation in which the attribute information of the first value is factored, the second value information calculated can be value information in which the attribute information of the first value has been factored. Depending on the magnitude of the second value calculated in the future, a user may consider stopping the use of distributed ledger 211 to manage the first value information and as a result, the power consumption required for distributed ledger 211 to store the value information may be reduced. Thus, information processing system 1 can reduce the power consumption required for distributed ledger 211 to store the value information.

### [Variation 1 of Embodiment]

In the present variation, an example will be described where, in information processing system 1 according to the above embodiment, distributed ledger system 20 obtains, from management device 40, the calculation algorithm to be used for calculation of the second value information.

FIG. 13 is a sequence chart illustrating an example of the processing performed by information processing system 1 according to Variation 1 of the present embodiment. Step S205A indicated in FIG. 13 is performed instead of Step S205 indicated in FIG. 12. The processes in Steps S221 to S223 indicated in FIG. 13 are performed before the process in Step S205A.

In Step S221, management device 40 generates the transaction data including the calculation algorithm, and transmits the transaction data to distributed ledger system 20. Distributed ledger system 20 receives the transaction data transmitted thereto.

In Step S222, distributed ledger system 20 stores, into distributed ledger 211, the transaction data received in Step S221.

In Step S223, distributed ledger system 20 reads the calculation algorithm from distributed ledger 211. Specifically, distributed ledger system 20 reads the calculation algorithm included in the transaction data stored in distributed ledger 211 (that is, the transaction data stored in Step S222).

In Step S205A, by using the calculation algorithm that has been read in Step S223, distributed ledger system 20 calculates the second value information regarding the token that has been read in Step S204.

After completion of the process in Step S205A, the processes in Step S206 and the following steps indicated in FIG. 12 are performed.

In this manner, in information processing system 1, the calculation algorithm is stored into distributed ledger 211, and the second value information is calculated using said stored calculation algorithm. Thus, information processing system 1 can substantially prevent tampering with the calculation algorithm and can therefore calculate the second value information more properly.

### [Variation 2 of Embodiment]

In the present variation, an example will be described where, in information processing system 1 according to the above embodiment, distributed ledger system 20 obtains, from management device 40, the information to be used for calculation of the second value information.

FIG. 14 is a sequence chart illustrating an example of the processing performed by information processing system 1 according to Variation 2 of the present embodiment. Step S205B indicated in FIG. 14 is performed instead of Step S205 indicated in FIG. 12. The processes in Steps S241 to S242 indicated in FIG. 14 are performed before the process in Step S205B.

In Step S241, distributed ledger system 20 transmits relevant information obtainment request information. The relevant information is information to be used for calculation of the second value information; in other words, the relevant information is information to be input to the calculation algorithm. Management device 40 receives the obtainment request information transmitted thereto.

In Step S242, management device 40 transmits the relevant information to distributed ledger system 20 as a result of receiving the obtainment request in Step S241. Distributed ledger system 20 receives the relevant information transmitted thereto.

In Step S205B, distributed ledger system 20 inputs, to the calculation algorithm, the relevant information received in Step S242, and thus calculates the second value information.

After completion of the process in Step S205B, the processes in Step S206 and the following steps indicated in FIG. 12 are performed.

In this manner, distributed ledger system 20 can more properly calculate the second value information regarding the token by using the relevant information obtained from management device 40.

### [Explanation about Distributed Ledger System]

Distributed ledger system 20 described above (which will also be referred to simply as the distributed ledger system) will be described in detail below.

The distributed ledger system is a system that stores and maintains information by using the peer-to-peer (P2P) networking technology in which a plurality of nodes are connected. Each of the nodes is an information processing device that performs a predetermined process by a processor (for example, CPU) executing a program by using memory.

In the distributed ledger system, the plurality of nodes hold copies of information in an autonomous, decentralized manner, and remain synchronized with each other. Thus, the distributed ledger system can properly store information while substantially preventing tampering with the information, without using a privileged node (for example, a centralized server or a client/server-model server).

A device that needs to access the distributed ledger is required to only access one of the plurality of nodes included in the distributed ledger system; in other words, the device does not need to access devices such as a few centralized servers. As a result, the concentration of communication loads or processing loads on the centralized servers that may occur in a centralized system will be avoided. Therefore, there is no demand for high-specification resources (CPU, memory, and the like) of the node, and the required communication capacity of a communication line to which the node is connected is not so large, which are advantageous. As a result, the distributed ledger system can be configured of commonly used (or versatile) nodes or communication lines, meaning that the distributed ledger system can contribute to the effect of reducing the required computer resources or communication resources or reducing the cost required for the nodes and the communication lines.

Furthermore, the distributed ledger system can store information with a high resistance to failure and allows the information to be referred to with a high resistance to failure. This is because, although the distributed ledger system stops when all the nodes included in the distributed ledger system stop, it is rare that all the nodes stop, meaning that the distributed ledger system rarely stops. This is advantageous against the failure to store information or the failure to refer to information when the centralized servers stop, which may occur in a centralized system.

With reference to FIG. 15 to FIG. 18, the data structure of the distributed ledger and the execution of the smart contract will be described.

FIG. 15 is an explanatory diagram illustrating the data structure of a blockchain which is one example of the distributed ledger.

A blockchain is made up of blocks, each of which is a recording unit of the blockchain, linked together in the form of a chain. Each of the blocks includes a plurality of items of transaction data and a hash value of an immediately preceding block.

FIG. 15 illustrates blocks B1, B2, and B3 included in the blockchain.

For example, block B2 includes the hash value of previous block B1. The hash value of previous block B1 is a hash value calculated by an operation on the content of block B1 according to a hash algorithm.

Furthermore, a hash value calculated using the hash value of block B1 and the plurality of items of transaction data included in block B2 is included in block B3 as the hash value of block B2.

Thus, a blockchain is configured such that blocks each including the content of a previous block as a hash value are linked together in the form of a chain and therefore, the recorded transaction data can be effectively prevented from being tempered with.

If previous transaction data is changed (in other words, tampered with), the hash value of the block including said transaction data becomes different from the original value. In this case, in order to make the block including the modified transaction data look correct, all the blocks subsequent to said block in the distributed ledger stored in the plurality of servers need to be recreated, which is an extremely difficult task in practice. With this feature, the transaction data included in the blockchain can be virtually impossible to tamper with.

Note that in storing transaction data into a blockchain, a node generates a block including the transaction data to be stored and performs a process based on a consensus algorithm to form an agreement on the generated block with other nodes. When the agreement is formed, the node performs control to store said block into the blockchain. Thus, the plurality of nodes that operate in an autonomous, decentralized manner can connect valid blocks to the blockchain. As the consensus algorithm, practical byzantine fault tolerance (PBFT) may be used, or proof of work (PoW), proof of stake (PoS), or the like may be used. Note that when Hyperledger Fabric is used as one example of the distributed ledger technology, the consensus algorithm does not need to be executed.

FIG. 16 is an explanatory diagram illustrating the data structure of transaction data.

The transaction data illustrated in FIG. 16 includes transaction body BP1 and digital signature BP2 (also referred to simply as the signature). Transaction body BP1 is a data body included in said transaction data. Digital signature BP2 is generated by encrypting the hash value of transaction body BP1 with a signature key (in other words, a private key) of a creator of said transaction data.

Because of including digital signature BP2, the transaction data is virtually impossible to tamper with. With this feature, the data included in transaction body BP1 can be virtually impossible to tamper with.

As described above, the transaction data included in the blockchain is joined together using the hash values of the transaction data and the hash values of the blocks when stored in the blockchain. This allows the transaction data included in the blockchain to be stored and maintained in a substantially tamper-proof manner. This is an advantage different from that of a distributed database or a database in which a collection of data is simply stored.

FIG. 17 is an explanatory diagram illustrating transaction data related to the execution of the smart contract. FIG. 18 is an explanatory diagram illustrating processing related to the execution of the smart contract.

With reference to FIG. 17 and FIG. 18, a series of processes related to the execution of the smart contract using the distributed ledger will be described.

In Step SB1, a node stores, into distributed ledger B10, transaction data B11 including contract code B12 in which the processing of the smart contract is written. For example, the node receives transaction data B11 from an information processing device via communication or the node itself generates transaction data B11 and thus, the node obtains transaction data B11, and stores obtained transaction data B11 into distributed ledger B10. Step SB1 is performed before the smart contract is executed.

In Step SB2, the node stores, into distributed ledger B10, transaction data B15 including command B16 to cause the execution of the smart contract. For example, the node receives transaction data B15 from an information processing device via communication and stores received transaction data B15 into distributed ledger B10.

In Step SB3, the node reads contract code B12 from distributed ledger B10 as a result of transaction data B15 including command B16 being stored into distributed ledger B10 in Step SB2, and performs a process based on contract code B12. The result of said process may be included in the transaction data and stored into distributed ledger B10.

When the distributed ledger system receives transaction data B15 including command B16 to cause the execution of the smart contract, the distributed ledger system automatically (in other words, without manual intervention) performs processes that follow command B16 by the above-described series of processes and can therefore perform the processes efficiently (in other words, at high speed or in a short time). Realization of the efficient processes results in the effect of reduced power consumption. Furthermore, since there is no manual intervention, tampering with information by a person, a fraudulent act, or a human error can be prevented. Moreover, since the result of the processes performed in this manner is stored into the blockchain, the result of the processes can be virtually impossible to tamper with.

Note that in the above embodiment, each of the structural elements may be configured in the form of an exclusive hardware product, or may be realized by executing a software program suitable for the structural element. Each of the structural elements may be realized by means of a program executing unit, such as a CPU or a processor, reading and executing the software program recorded on a recording medium such as a hard disk or a semiconductor memory. Here, the software program for realizing the information processing device, etc., according to the above embodiment is a program described below.

Specifically, this program causes a computer to perform an information processing method that is performed by an information processing system and includes: storing, into a distributed ledger, transaction data indicating first value information that indicates a first value and to which attribute information of the first value is linked; reading the first value information indicated in the transaction data stored in the distributed ledger; performing a calculation process of calculating second value information indicating a second value, by performing, for the first value information that has been read, an operation in which the attribute information linked to the first value information is factored; and outputting the second value information calculated in the calculation process.

The information processing method, etc., according to one or more aspects have been described thus far based on the embodiment, but the present invention is not limited to this embodiment. Various modifications to the present embodiment and forms configured by combining structural elements in different embodiments that can be conceived by those skilled in the art may be included within the scope of one or more aspects as long as these do not depart from the essence of the present invention.

### [Industrial Applicability]

The present invention is usable for a system that manages value information by using a distributed ledger.

### [Reference Signs List]

1 information processing system
10 processing device
11 power generation device
20 distributed ledger system
21, 22, 23 ledger server
30 conversion device
40 management device
51 token
53 attribute information
55 calculation algorithm
57 currency information
101, 201, 301, 401 communicator
102 obtainer
103, 302, 402 processor
202 ledger processor
203 executor
204 storage
211, B10 distributed ledger
B1, B2, B3 block
B11, B15 transaction data
B12 contract code
B16 command
BP1 transaction body
BP2 digital signature
N network
T terminal
U1, U2 user

## Claims

1. An information processing method that is performed by an information processing system, the information processing method comprising:
storing, into a distributed ledger, transaction data indicating first value information that indicates a first value and to which attribute information of the first value is linked;
reading the first value information indicated in the transaction data stored in the distributed ledger;
performing a calculation process of calculating second value information indicating a second value, by performing, for the first value information that has been read, an operation in which the attribute information linked to the first value information is factored; and
outputting the second value information calculated in the calculation process.

2. The information processing method according to claim 1, wherein
the attribute information includes a date and time of generation of the first value, and
in the calculating of the second value information,
the second value information is calculated using a calculation algorithm for calculating the second value information by using, as input, a current date and time and the date and time of generation included in the attribute information linked to the first value information that has been read.

3. The information processing method according to claim 2, wherein
in the calculating of the second value information,
the second value information indicating the second value that decreases with time since the date and time of generation included in the attribute information linked to the first value information that has been read is calculated.

4. The information processing method according to claim 1, wherein
the first value information is owned by a user, and
the information processing method further comprises:
performing a transfer process of transferring the second value information calculated in the calculation process from a manager to the user.

5. The information processing method according to claim 4, wherein
the transfer process further includes:
a process of storing, into the distributed ledger, transaction data indicating transfer of the first value information from the user to the manager or transaction data indicating deletion of the first value information.

6. The information processing method according to claim 1, wherein
the first value includes an environmental value of power generation from renewable energy, and
the first value information includes an amount of electric power obtained by the power generation.

7. The information processing method according to claim 6, wherein
the attribute information includes a date and time of power generation when the power generation occurs, and
in the calculating of the second value information,
the second value information indicating the second value that decreases with time since the date and time of power generation included in the attribute information linked to the first value information that has been read is calculated.

8. The information processing method according to claim 6 or 7, wherein
the attribute information includes a power generation location where the power generation occurs and a consumption location where the electric power obtained by the power generation is consumed, and
in the calculating of the second value information,
the second value information indicating the second value that decreases with an increase in a separation distance is calculated, the separation distance being a distance between the power generation location and the consumption location included in the attribute information linked to the first value information that has been read.

9. The information processing method according to claim 1, wherein
the first value information is a virtual currency or a token managed using the distributed ledger, and
the second value information is legal tender or is a virtual currency or a token different from the virtual currency or the token that is the first value information.

10. The information processing method according to claim 1, wherein
in the performing of the calculation process, the calculation process is performed according to a smart contract by using the distributed ledger.

11. An information processing system comprising:
a ledger processor that stores, into a distributed ledger, transaction data indicating first value information that indicates a first value and to which attribute information of the first value is linked, and reads the first value information indicated in the transaction data stored in the distributed ledger; and
an executor that performs a calculation process of calculating second value information indicating a second value, by performing, for the first value information that has been read by the ledger processor, an operation in which the attribute information linked to the first value information is factored, and outputs the second value information calculated in the calculation process.

12. A program that causes one or more computers to perform the information processing method according to claim 1.
